# EUROPÄISCHE PATENTSCHRIFT

(11) **EP 1 197 401 B1**
(45) Veröffentlichungstag und Bekanntmachung des Hinweises auf die Patenterteilung: **10.05.2006**
(21) Anmeldenummer: 01123308.7
(22) Anmeldetag: 08.10.2001
(51) Int. Cl.: B60R 21/16

(54) **Vorrichtung und Verfahren zum Zusammenlegen eines Gassacks sowie zusammengelegter Gassack**
Process and device for folding an airbag and airbag folded thereby
Procédé et dispositif de pliage d'un coussin gonflable et le coussin gonflable ainsi plié

(30) Priorität: 12.10.2000 DE 10050570
(43) Veröffentlichungstag der Anmeldung: 17.04.2002
(73) Patentinhaber: TRW Automotive Safety Systems GmbH, 63743 Aschaffenburg (DE)
(72) Erfinder: Bohn, Stefan, 63773 Goldbach (DE); Fellhauer, Joachim, 63741 Nilkheim (DE)
(74) Vertreter: Sties, Jochen

(56) Entgegenhaltungen:
- EP-A- 0 712 760
- DE-A- 19 845 721
- DE-A- 19 901 472
- US-A- 6 115 998

## Beschreibung

Die Erfindung betrifft eine Vorrichtung zum Zusammenlegen eines Gassacks für ein Fahrzeuginsassen-Rückhaltesystem, ein Verfahren zum Zusammenlegen eines solchen Gassacks sowie einen zusammengelegten Gassack.

Gassäcke, die durch Aktivierung eines Gasgenerators aus einem zusammengelegten Zustand in einen entfalteten Zustand überführt werden können, sind mittlerweile ein weit verbreiteter Bestandteil von Fahrzeuginsassen-Rückhaltesystemen. Eine wichtige Anforderung, die ein solches Gassack-Rückhaltesystem erfüllen muß, besteht darin, daß der Gassack in sehr kurzer Zeit vollständig entfaltet werden kann. Der Entfaltungsvorgang wird dabei wesentlich durch die Art und Weise bestimmt, wie der Gassack vorher zusammengelegt wurde.

Früher wurden Gassäcke allgemein ziehharmonikaartig gefaltet, beispielsweise durch die Verwendung von Faltschwertern. Es hat sich jedoch herausgestellt, daß die auf diese Weise erzeugten, vergleichsweise großen Falten das Entfalten des Gassacks behindern. Heute werden Gassäcke vielfach nicht präzise gefaltet, sondern lediglich zusammengeschoben, so daß eine chaotische Faltung entsteht.

Der Begriff "chaotisch" bedeutet, daß die konkrete Lage der verschiedenen Wandungsteile des Gassacks nicht vorhergesagt werden kann und sich von Gassack zu Gassack unterscheidet. Ein solches chaotisches Faltungs- oder Zusammenlegverfahren bietet gegenüber herkömmlichen, mit Faltschwertern arbeitenden Verfahren den Vorteil, daß ein geringerer Arbeitsaufwand beim Zusammenlegen erforderlich ist und ein besseres Entfalten erhalten wird.

Die US 6,115,998, die den nächstkommenden Stand der Technik darstellt, offenbart ein Verfahren zur Faltung eines Airbags, bei dem der Airbag zunächst ausgebreitet wird. Der Raum um den Airbag wird dann so begrenzt, daß die vertikale Abmessung im wesentlichen der gewünschten vertikalen Abmessung des gefalteten Airbags entspricht. Schließlich wird der leere ausgebreitete Airbag so zur Mitte hin zusammengerafft, daß sich eine Vielzahl von Falten bildet. Es ist auch eine zugehörige Faltvorrichtung offenbart, die eine obere und eine untere Platte zur Festlegung der vertikalen Abmessung aufweist und dazwischen einen ausgebreiteten Airbag aufnehmen kann. In den Plattenebenen verschiebliche Raffelemente, die ebenfalls zwischen den Platten angeordnet sind und den Airbag umgeben, können den Airbag zusammenschieben und eine Faltung des Airbags bewirken.

Die Aufgabe der Erfindung besteht darin, eine Vorrichtung und ein Verfahren zum chaotischen Zusammenlegen eines Gassacks zu schaffen, bei der bzw. dem sich ein geringer Aufwand für das Zusammenlegen ergibt.

Zu diesem Zweck ist erfindungsgemäß eine Vorrichtung zum Falten eines Gassacks vorgesehen, mit einer Unterlage für den zu faltenden Gassack, einer Abdeckung für den Gassack, einem flexiblen Element, das den Gassack umschlingen kann und zwischen der Unterlage und der Abdeckung angeordnet ist, sowie ein erstes und ein zweites Ende aufweist, einem Zugmittel, und mit einem Druckbeaufschlagungsmittel, mittels dem der Gassack mit Druckgas beaufschlagt werden kann. Die erfindungsgemäße Vorrichtung ist dadurch gekennzeichnet, daß das erste Ende des flexiblen Elements zwischen der Unterlage und der Abdeckung gehalten ist und das Zugmittel nur am zweiten Ende des flexiblen Elements angreift. Durch Ziehen am zweiten Ende des flexiblen Elements wird dieses zusammengezogen, so daß sich eine immer enger werdende Schlinge ergibt. Dadurch wird der Gassack von außen nach innen zusammengeschoben, bis er den gewünschten, vollständig zusammengelegten Zustand erreicht. Im Vergleich mit anderen Vorrichtungen, die mit Schiebern oder Schwertern arbeiten, ergibt sich ein besonders einfacher Aufbau, da keine komplizierten Bewegungen erforderlich sind, um den Gassack zusammenzulegen; es genügt eine einfache Zugbewegung am zweiten Ende des flexiblen Elements.

Vorzugsweise ist vorgesehen, daß das flexible Element ein Metallband ist, dessen Breite dem Abstand zwischen der Unterlage und der Abdeckung entspricht. Auf diese Weise ist ein vollständig von dem Metallband, der Unterlage und der Abdeckung umschlossener Raum gebildet, aus dem der Gassack beimZusammenlegen nicht entweichen kann. Das Metallband ist vorzugsweise ein Federstahlband, welches nach dem Zusammenziehen wieder seine ursprüngliche, aufgeweitete Form annimmt, wenn das zweite Ende freigegeben wird.

Gemäß der bevorzugten Ausführungsform der Erfindung ist vorgesehen, daß das erste Ende des flexiblen Elements fest zwischen der Unterlage und der Abdeckung angebracht ist. Dies erleichtert sowohl die Anbringung des ersten Endes des flexiblen Elementes als auch die Führung des flexiblen Elementes in dem Bereich, in welchem das flexible Element, nachdem es den Gassack umschlungen hat, aus der Vorrichtung herausgezogen wird. An dieser Stelle muß nämlich, um ein Eintreten des Gassacks in den Spalt zu verhindern, der zwischen dem zur Schleife gelegten flexiblen Element und dem ersten Ende des flexiblen Elementes vorliegt, der Spalt so eng wie möglich sein.

Wenn das erste Ende des flexiblen Elementes in der beschriebenen Weise festgelegt ist, wird der ganze Gassack beim Zusammenlegen mit Ausnahme des Bereichs, der unmittelbar neben dem ersten Ende des flexiblen Elementes liegt, zu diesem ersten Ende hinbewegt. Aus diesem Grunde ist vorzugsweise vorgesehen, daß die Unterlage mit einer Aufnahme für eine Halteplatte des Gassacks versehen ist und die Aufnahme nach Art einer Schiebeführung ausgebildet ist. Dies gewährleistet, daß der Gassack trotz seiner Verlagerung während des Zusammenschiebens eine zusammengelegte Form aufweist, bei der die Wandung annähernd symmetrisch um eine Einblasöffnung des Gassacks herum angeordnet ist, die üblicherweise im Bereich der Halteplatte ausgebildet ist.

Gemäß einer alternativen Ausführungsform kann auch vorgesehen sein, daß das erste Ende des flexiblen Elements translatorisch verschiebbar zwischen der Unterlage und der Abdeckung angebracht ist. Bei dieser Ausgestaltung bleibt das Zentrum des Gassacks stationär, also beispielsweise die mit der Halteplatte versehene Einblasöffnung, während alle Wandungsteile symmetrisch von außen nach innen zur Einblasöffnung hin bewegt werden.

Zum Herausziehen des flexiblen Elementes aus dem Bereich zwischen der Unterlage und der Abdeckung kann beispielsweise ein Verstellzylinder verwendet werden. Ein solcher Verstellzylinder stellt ein konstruktiv einfaches Bauteil dar, mit dem mit geringem Aufwand beispielsweise weggesteuert oder kraftgesteuert die um den Gassack gelegte Schlaufe zusammengezogen werden kann. Wenn die von dem flexiblen Element gebildete Schlaufe weggesteuert zusammengezogen wird, wird das Zusammenschieben erst dann beendet, wenn der Gassack bis auf einen vorher festgelegten Umfang zusammengeschoben wurde. Bei einem kraftgesteuerten Zusammenschieben des Gassacks wird das Zusammenziehen der Schlaufe beendet, sobald die Wandung des Gassacks einem weiteren Zusammenschieben einen vorbestimmten Widerstand entgegensetzt.

Gemäß der bevorzugten Ausführungsform der Erfindung ist das Druckbeaufschlagungsmittel als Gebläse ausgebildet. Dies ermöglicht es, daß Innere des Gassacks auf einfache Weise unter Druck zu setzen, damit sich der Gassack zwischen der Unterlage und der Abdeckung sowie dem flexiblen Element entfaltet. Auf diese Weise kann der Gassack vor dem Zusammenlegen in einen teilentfalteten Zustand gebracht werden, in welchem seine Höhe beispielsweise mit der Höhe einer zur Aufnahme des Gassacks vorgesehenen Unterbringung übereinstimmt. Anders ausgedrückt wird der Gassack von dem Druckbeaufschlagungsmittel in eine Form entfaltet, in welcher der Gassack im Vergleich mit dem vollständig entfalteten Zustand nur einen Bruchteil der Höhe hat.

Vorzugsweise ist vorgesehen, daß das flexible Element mit einer Vielzahl von kleinen Öffnungen versehen ist und daß Druckbeaufschlagungsmittel mit der Außenfläche des flexiblen Elements in Strömungsverbindung steht. Auf diese Weise kann ein Luftpolster zwischen der Wandung des Gassacks und dem flexiblen Element erzeugt werden. Das Luftpolster verringert die Reibung zwischen der Wandung des Gassacks und dem flexiblen Element, so daß das flexible Element die Wandung weniger in Umfangsrichtung mitnimmt, sondern überwiegend von außen nach innen beaufschlagt.

Zur Lösung der oben genannten Aufgabe ist auch ein Verfahren zum Zusammenlegen eines Gassacks vorgesehen, das die folgenden Schritte enthält: Zunächst wird der Gassack innerhalb eines Bereichs, der von dem flexiblen Element umgeben ist, auf einer Unterlage ausgebreitet. Dann wird auf das flexible Element eine Abdeckung aufgesetzt. Anschließend wird der Gassack mit Druck beaufschlagt. Dadurch entfaltet er sich zwischen der Unterlage, der Abdeckung und dem flexiblen Element. Erfindungsgemäß wird anschließend das erste Ende des flexiblen Elements beim Zusammenschieben des Gassacks zwischen der Unterlage und der Abdeckung gehalten, und das flexible Element wird nur durch Ziehen an seinem zweiten Ende zusammengezogen, wodurch der Gassack zusammengeschoben wird. Hinsichtlich der Vorteile dieses Verfahrens wird auf die obigen Erläuterungen verwiesen.

Ein mit der erfindungsgemäßen Vorrichtung und dem erfindungsgemäßen Verfahren zusammengelegter Gassack zeichnet sich dadurch aus, daß die Wandung des Gassacks eine Vielzahl von chaotisch verlaufenden Einzelfaltlinien aufweist, wobei mehrere leicht spiralförmig um ein Zentrum verlaufende Hauptfaltlinien vorhanden sind. Die Einzelfaltlinien ergeben sich durch das im wesentlichen radiale Zusammensschieben des Gassacks von außen nach innen. Die spiralförmig verlaufenden Hauptfaltlinien ergeben sich durch die Reibung zwischen dem flexiblen Element und der Wandung des Gassacks; die einzelnen Berührstellen zwischen dem flexiblen Element und der Wandung des Gassacks führen beim Zusammenziehen der vom flexiblen Element um den Gassack gebildeten Schlaufe eine spiralförmige Bewegung aus.

Vorteilhafte Ausgestaltung der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einem schematischen Schnitt entlang der Ebene I-I von Figur 2 eine Draufsicht auf eine erfindungsgemäße Vorrichtung; und
- Figur 2 in einem schematischen Schnitt entlang der Ebene II-II von Figur 1 die Vorrichtung von Figur 1 in einer Seitenansicht.

Die Vorrichtung zum Zusammenlegen eines Gassacks enthält eine Unterlage 10, einen Deckel 12 sowie eine Seitenwand 14. Auf der Unterlage 10 ist ein Gassack 16 angeordnet, der mit einer Halteplatte 18 im Bereich seiner Einblasöffnung versehen ist. Die Halteplatte 18 ist auf einem Schlitten 20 angebracht, der in einer Schiebeführung 22 in der Unterlage 10 angeordnet ist.

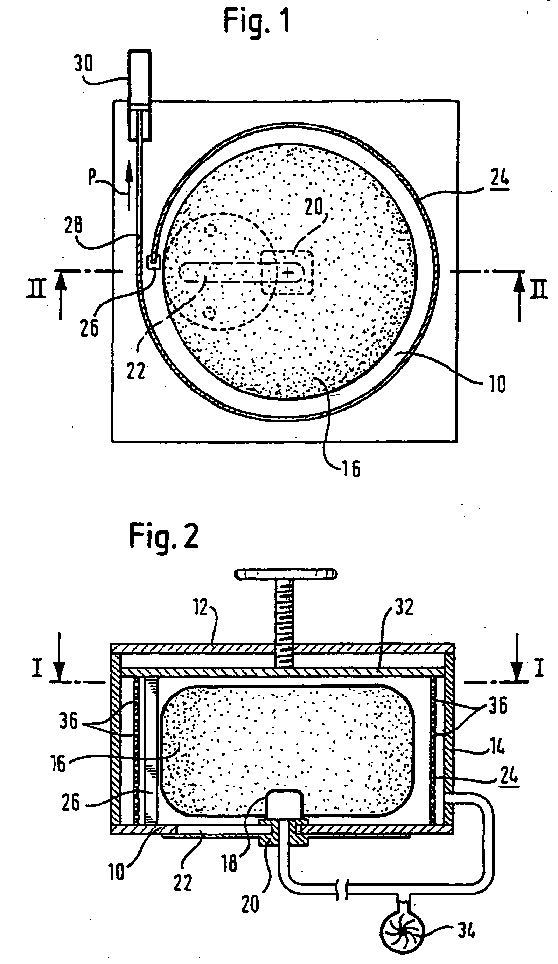

Senkrecht auf der Unterlage 10 ist ein flexibles Element 24 angeordnet, das hier als Stahlfederband ausgebildet ist. Das Stahlfederband 24 weist ein erstes Ende 26 auf, das ortsfest angebracht ist. Das zweite Ende 28 des Stahlfederbandes ist mit einem Zugmittel 30 verbunden, das hier als Verstellzylinder ausgeführt ist. Das Metallfederband 24 ist, wie in Figur 1 zu sehen ist, kreisförmig oder schlaufenförmig um den Gassack 16 herum angeordnet, wobei die Kreisform dadurch erhalten wird, daß das Stahlfederband 24, nachdem es den Gassack vollständig umschließt, nahe am ersten Ende 26 vorbeigeführt wird.

Auf dem Stahlfederband 24 ist eine Abdeckung 32 angeordnet, so daß sich ein von der Unterlage 10, dem Stahlfederband 24 und der Abdeckung 32 abgeschlossener Raum ergibt, in welchem der Gassack 16 angeordnet ist. Die Abdeckung 32 ist im Deckel 12 mit einem Gewinde gehalten, wodurch ihr Abstand von der Unterlage 10 so eingestellt werden kann, daß zwischen dem Stahlfederband 24 und der Unterlage bzw. dem Deckel nur ein schmaler Spalt vorhanden ist. Dadurch ist verhindert, daß der Gassack aus dem Raum zwischen dem Stahlfederband, der Abdeckung 32 und der Unterlage 10 austreten kann.

Die Vorrichtung ist ferner mit einem Druckbeaufschlagungsmittel 34 versehen, das hier als Gebläse ausgeführt ist. Das Gebläse steht mit der Einblasöffnung des Gassacks im Bereich der Halteplatte 18 in Strömungsverbindung, so daß das Innere des Gassacks mit Druckgas beaufschlagt werden kann und sich der Gassack zwischen der Unterlage 10, dem Stahlfederband 24 und der Abdeckung 32 entfalten kann. Das Gebläse 34 steht ferner mit dem Raum zwischen der Seitenwand 14 und dem Stahlfederband 24 in Verbindung.

Das Stahlfederband 24 ist mit mehreren kleinen Öffnungen 36 versehen, deren Funktion später erläutert wird.

Der zusammenzulegende Gassack wird bei abgenommenen Deckel 12 und abgenommener Abdeckung 32 in den vom Stahlfederband 24 umschlossenen Raum eingelegt, wobei die Halteplatte 18 des Gassacks mit dem Schlitten 20 verbunden wird. Dann wird die Abdeckung 32 zusammen mit dem Deckel 12 montiert, und der Abstand der Abdeckung von der Unterlage wird in der gewünschten Weise eingestellt. Anschließend wird der Gassack vom Gebläse 34 mit Druck beaufschlagt, so daß er sich zwischen der Abdeckung 32 und der Unterlage 10 in die in Figur 2 dargestellte, stark abgeplattete Form entfaltet. Die stark abgeplattete Form ist dadurch gekennzeichnet, daß die Höhe des Gassacks in diesem Zustand sehr viel kleiner ist als die Höhe, die er bei einem freien, vollständigen Entfalten einnehmen würde.

Mittels des Gebläses 34 wird auch der Raum zwischen der Seitenwand 14 und dem Stahlfederband 24 unter Druck gesetzt, so daß aufgrund der Öffnungen 36 sich ein Luftpolster zwischen der Außenseite der Wandung des Gassacks 16 und dem Stahlfederband 24 bildet. Dann kann durch Ziehen am zweiten Ende 28 des Stahlfederbandes in der Richtung des Pfeils P von Figur 1 die um den Gassack gebildete Schlaufe zusammengezogen werden, so daß der Gassack immer weiter radial nach innen zusammengeschoben wird, bis er schließlich die in Figur 1 gestrichelt angedeutete Form hat. Beim Zusammenschieben wandert die Halteplatte 18 zusammen mit dem Schlitten 20 automatisch bezüglich Figur 1 nach links, da die Einblasöffnung zu jedem Stadium des Zusammenlegens etwa die Mitte des Gassacks bildet.

Aufgrund der geringen Reibung zwischen der Wandung des Gassacks und dem Stahlfederband 24 wird der Gassack im wesentlichen radial zusammengeschoben und weniger in Umfangsrichtung verdreht. Der Spalt zwischen dem ersten, festgehaltenen Ende 26 des Stahlfederbandes 24 und dem Bereich des Stahlfederbandes, der gerade an diesem Ende vorbeigezogen wird, wird so klein wie möglich gehalten, um ein Hineinrutschen des Gassacks in diesen Spalt zu verhindern.

Nach dem vollständigen Zusammenschieben des Gassacks kann an dessen Innenraum ein Unterdruck angelegt werden, beispielsweise durch eine Drehrichtungsumkehr des Gebläses 34, so daß der Gassack in seiner zusammengeschobenen Form gehalten wird und in beispielsweise einer Aufnahme eingelegt oder mit einer Banderole umschlossen werden kann.

## Patentansprüche

1. Vorrichtung zum Zusammenlegen eines Gassacks (16) für einen Fahrzeuginsassen-Rückhaltesystem, mit einer Unterlage (10) für den zusammenzulegenden Gassack (16), einer Abdeckung (32) für den Gassack (16), einem flexiblen Element (24), das den Gassack (16) umschlingen kann und zwischen der Unterlage (10) und der Abdeckung (32) angeordnet ist sowie ein erstes Ende (26) und ein zweites Ende (28) aufweist, einem Zugmittel (30), und mit einem Druckbeaufschlagungsmittel (34), mittels dem der Gassack (16) mit Druckgas beaufschlagt werden kann, **dadurch gekennzeichnet, daß** das erste Ende (26) des flexiblen Elements (24) zwischen der Unterlage und der Abdeckung (32) gehalten ist, und das Zugmittel nur am zweiten Ende des flexiblen Elements (24) angreift.

2. Vorrichtung nach Anspruch 1, **dadurch gekennzeichnet, daß** das flexible Element ein Metallband (24) ist, dessen Breite dem Abstand zwischen der Unterlage und der Abdeckung entspricht.

3. Vorrichtung nach einem der Ansprüche 1 und 2, **dadurch gekennzeichnet, daß** das erste Ende (26) des flexiblen Elements fest zwischen der Unterlage und der Abdeckung angebracht ist.

4. Vorrichtung nach Anspruch 3, **dadurch gekennzeichnet, daß** die Unterlage mit einer Aufnahme (20) für eine Halteplatte (18) des Gassacks versehen ist und die Aufnahme nach Art einer Schiebeführung (22) ausgebildet ist.

5. Vorrichtung nach einem der Ansprüche 1 und 2, **dadurch gekennzeichnet, daß** das erste Ende (26) des flexiblen Elements translatorisch verschiebbar zwischen der Unterlage und der Abdeckung angebracht ist.

6. Vorrichtung nach einem der vorhergehenden Ansprüche, **dadurch gekennzeichnet, daß** das Zugmittel ein Verstellzylinder (32) ist.

7. Vorrichtung nach einem der Ansprüche 1 bis 5, **dadurch gekennzeichnet, daß** das Zugmittel eine Seilwinde ist.

8. Vorrichtung nach einem der vorhergehenden Ansprüche, **dadurch gekennzeichnet, daß** das flexible Element (24) mit einer Vielzahl von kleinen Öffnungen (36) versehen ist und das Druckbeaufschlagungsmittel (34) mit der Außenfläche des flexible Elements in Strömungsverbindung steht.

9. Vorrichtung nach einem der vorhergehenden Ansprüche, **dadurch gekennzeichnet, daß** das Druckbeaufschlagungsmittel ein Gebläse (34) ist.

10. Verfahren zum Falten eines Gassacks, insbesondere mit einer Vorrichtung nach einem der vorhergehenden Ansprüche, enthaltend die folgenden Schritte:
- der Gassack (16) wird innerhalb eines Bereichs, der von einem flexiblen Element (24) umgeben ist, auf einer Unterlage (10) ausgebreitet,
- es wird eine Abdeckung (32) auf das flexible Element (24) aufgesetzt,
- der Gassack (16) wird mit Druck beaufschlagt,
**dadurch gekennzeichnet, daß**
- das erste Ende (26) des flexiblen Elements (24) beim Zusammenschieben des Gassacks (16) zwischen der Unterlage (10) und der Abdeckung (32) gehalten wird, und
- das flexible Element (24) durch Ziehen nur an seinem zweiten Ende (28) zusammengezogen wird, wodurch der Gassack (16) zusammengeschoben wird.

11. Verfahren nach Anspruch 10, **dadurch gekennzeichnet, daß** das erste Ende (26) des flexiblen Elements stationär gehalten wird.

12. Verfahren nach Anspruch 10, **dadurch gekennzeichnet, daß** das erste Ende (26) des flexiblen Elements translatorisch verstellt wird.

13. Verfahren nach einem der Ansprüche 10 bis 12, **dadurch gekennzeichnet, daß** an den Gassack (16) nach dem Zusammenschieben ein Unterdruck angelegt wird.

14. Verfahren nach einem der Ansprüche 10 bis 13, **dadurch gekennzeichnet, daß** das flexible Element (24) kraftgesteuert zusammengezogen wird.

15. Verfahren nach einem der Ansprüche 10 bis 13, **dadurch gekennzeichnet, daß** das flexible Element (24) weggesteuert zusammengezogen wird.

16. Zusammengelegter Gassack, gefaltet mit einem Verfahren gemäß einem der Ansprüche 10 bis 15, **dadurch gekennzeichnet, daß** die Wandung des Gassacks (16) eine Vielzahl von chaotisch verlaufenden Einzelfaltlinien aufweist, wobei mehrere leicht spiralförmig um ein Zentrum verlaufende Hauptfaltlinien vorhanden sind.

## Claims

1. An apparatus for folding an airbag (16) for a vehicle occupant restraint system, comprising a base (10) for the airbag (16) to be folded, a cover (32) for the airbag (16), a flexible element (24) that is adapted to loop around the airbag (16) and is arranged between the base (10) and the cover (32) and has a first end (26) and a second end (28), a traction means (30), and a pressure application means (34) by means of which the airbag (16) can be acted upon with compressed gas, **characterized in that** the first end (26) of the flexible element (24) is held between the base and the cover (32) and the traction means only engages the second end of the flexible element (24).

2. The apparatus according to Claim 1, **characterized in that** the flexible element is a metal strip (24) whose width corresponds to the distance between the base and the cover.

3. The apparatus according to either of Claims 1 and 2, **characterized in that** the first end (26) of the flexible element is firmly fitted between the base and the cover.

4. The apparatus according to Claim 3, **characterized in that** the base is provided with a receptacle (20) for a holding plate (18) of the airbag and the receptacle is designed in the nature of a sliding guide (22).

5. The apparatus according to either of Claims 1 and 2, **characterized in that** the first end (26) of the flexible element is mounted between the base and the cover for translatory shifting motion.

6. The apparatus according to any of the preceding claims, **characterized in that** the traction means is an adjusting cylinder (32).

7. The apparatus according to any of Claims 1 to 5, **characterized in that** the traction means is a cable winch.

8. The apparatus according to any of the preceding claims, **characterized in that** the flexible element (24) is provided with a large number of small openings (36) and the pressure application means (34) is in flow connection with the outside surface of the flexible element.

9. The apparatus according to any of the preceding claims, **characterized in that** the pressure application means is a fan (34).

10. A method of folding an airbag, in particular comprising an apparatus according to any of the preceding claims, comprising the following steps:
- the airbag (16) is spread out on a base (10) within an area that is encircled by a flexible element (24),
- a cover (32) is placed onto the flexible element (24),
- the airbag (16) is acted upon with pressure,
**characterized in that**
- the first end (26) of the flexible element (24) is held between the base (10) and the cover (32) when the airbag (16) is pushed together, and
- the flexible element (24) is pulled together by pulling on its second end (28) only, as a result of which the airbag (16) is pushed together.

11. The method according to Claim 10, **characterized in that** the first end (26) of the flexible element is held in a stationary position.

12. The method according to Claim 10, **characterized in that** the first end (26) of the flexible element is shifted in translation.

13. The method according to any of Claims 10 to 12, **characterized in that** a negative pressure is applied to the airbag (16) after it has been pushed together.

14. The method according to any of Claims 10 to 13, **characterized in that** the flexible element (24) is pulled together in a force-controlled manner.

15. The method according to any of Claims 10 to 13, **characterized in that** the flexible element (24) is pulled together in a displacement-controlled manner.

16. A folded airbag, folded by means of a method according to any of Claims 10 to 15, **characterized in that** the wall of the airbag (16) has a large number of chaotically extending individual folding lines, several main folding lines being present that run in a slightly spiral shape around a center.

## Revendications

1. Dispositif de pliage d'un coussin à gaz (16) pour un système de retenue de passager de véhicule, comportant une base (10) pour le coussin à gaz (16) à plier, un couvercle (32) pour le coussin à gaz (16), un élément flexible (24) qui peut être enroulé autour du coussin à gaz (16) et qui est agencé entre la base (10) et le couvercle (32) et qui présente une première extrémité (26) et une deuxième extrémité (28), comportant un moyen de traction (30) et un moyen de mise sous pression (34) au moyen duquel le coussin à gaz (16) peut être mis sous pression par du gaz sous pression, **caractérisé en ce que** la première extrémité (26) de l'élément flexible (24) est maintenue entre la base et le couvercle (32), et le moyen de traction ne s'engage que sur la deuxième extrémité de l'élément flexible (24).

2. Dispositif selon la revendication 1, **caractérisé en ce que** l'élément flexible est une bande métallique (24) dont la largeur correspond à la distance entre la base et le couvercle.

3. Dispositif selon l'une des revendications 1 et 2, **caractérisé en ce que** la première extrémité (26) de l'élément flexible est montée de manière solidaire entre la base et le couvercle.

4. Dispositif selon la revendication 3, **caractérisé en ce que** la base est pourvue d'un logement (20) pour une plaque de retenue (18) du coussin à gaz, et le logement est réalisé à la manière d'un guidage coulissant (22).

5. Dispositif selon l'une des revendications 1 et 2, **caractérisé en ce que** la première extrémité (26) de l'élément flexible est monté déplaçable en translation entre la base et le couvercle.

6. Dispositif selon l'une des revendications précédentes, **caractérisé en ce que** le moyen de traction est un cylindre de réglage (32).

7. Dispositif selon l'une des revendications 1 à 5, **caractérisé en ce que** le moyen de traction est un treuil à câble.

8. Dispositif selon l'une des revendications précédentes, **caractérisé en ce que** l'élément flexible (24) est pourvu d'une multitude de petits orifices (36) et le moyen de mise sous pression (34) est en communication d'écoulement avec la surface extérieure de l'élément flexible.

9. Dispositif selon l'une des revendications précédentes, **caractérisé en ce que** le moyen de mise sous pression (34) est une soufflante (34).

10. Procédé de pliage d'un coussin à gaz, en particulier comportant un dispositif selon l'une des revendications précédentes, présentant les étapes suivantes :
- le coussin à gaz (16) est étalé sur une base (10) à l'intérieur d'une zone qui est entourée par un élément flexible (24),
- un couvercle (32) est posé sur l'élément flexible (24),
- le coussin à gaz (16) est mis sous pression,
**caractérisé en ce que**
- la première extrémité (26) de l'élément flexible (24) est maintenue entre la base (10) et le couvercle (32) lorsque le coussin à gaz (16) est comprimé,
- l'élément flexible (24) est contracté en tirant seulement à sa deuxième extrémité (28), grâce à quoi le coussin à gaz (16) est comprimé.

11. Procédé selon la revendication 10, **caractérisé en ce que** la première extrémité (26) de l'élément flexible est maintenue stationnaire.

12. Procédé selon la revendication 10, **caractérisé en ce que** la première extrémité (26) de l'élément flexible est déplacée en translation.

13. Procédé selon l'une des revendications 10 à 12, **caractérisé en ce qu'**une dépression est appliquée sur le coussin à gaz (16) après avoir comprimé celui-ci.

14. Procédé selon l'une des revendications 10 à 13, **caractérisé en ce que** l'élément flexible (24) est contracté par commande par force.

15. Procédé selon l'une des revendications 10 à 13, **caractérisé en ce que** l'élément flexible (24) est contracté par commande proportionnelle à la course.

16. Coussin à gaz plié, plié conformément à un procédé selon l'une des revendications 10 à 15, **caractérisé en ce que** la paroi du coussin à gaz (16) présente une multitude de lignes de pliage individuelles s'étendant de façon chaotique, dans lequel plusieurs lignes de pliage principales s'étendent de manière légèrement spiralée autour d'un centre.
